# EUROPEAN PATENT APPLICATION

(11) **EP 0 923 999 A2**
(43) Date of publication of application: **23.06.1999**
(21) Application number: 98123306.7
(22) Date of filing: 08.12.1998
(51) Int. Cl.: B09B 1/00

(54) **Enclosure**

(30) Priority: 10.12.1997 GB 9725999
(71) Applicant: Deboys, Philip, Aberdeenshire AB41 8PT (GB)
(72) Inventor: Deboys, Philip, Aberdeenshire AB41 8PT (GB)
(74) Representative: Kennedy, David Anthony

(57) **Abstract**

An enclosure suitable for use covering landfill sites of different dimensions comprises at least two stanchions (1) interconnected by at least one wire (5), the wire itself being used as a support for a barrier such as a net. The enclosure may be extended by adding stanchions and more sections of netting. The individual sections may be independently installed and removed for maintenance, repair or relocation. The use of discreet net sections also simplifies the supply of netting by avoiding the need to produce and handle a single net of larger dimensions.

## Description

This invention relates to an enclosure suitable for covering a landfill site.

It is common to surround landfill sites for burying rubbish etc with fences or nets to prevent the spread of litter from the site. Nets also prevent the colonisation of the site by large numbers of birds which, in addition to being an environmental hazard, can cause dangers for passing aircraft. Current designs of netting enclosures generally comprise stanchions embedded in the ground surrounding the landfill site and interconnected by wires to support a net above and around the landfill site. The net is generally assembled offsite to the required size and is delivered to the site in a single piece. The wires interconnecting the poles serve to support the individual poles and the net.

Some landfill sites are extremely large and are typically filled a portion at a time. It is, therefore, often desirable to be able to move the enclosure net to surround and cover the area of the landfill site being filled at a particular time, while the adjacent areas of the landfill site, which may be filled or empty, are unprotected. Movable net systems have been developed in the past, whereby the stanchions used to support the net are movable on rails, allowing the entire assembled enclosure to be moved from one area of a landfill site to another.

However, a common problem in these designs of netting enclosures is that they are generally of a fixed size that is determined offsite prior to delivery, and it is not possible to vary the size of the enclosure on site. In addition, if the netting is torn or otherwise damaged it is impractical to lower the whole of the netting enclosure in order to effect repairs, and therefore repairs must be done by erecting a platform to access the damaged portion of the net in situ.

According to the present invention there is provided an enclosure comprising a barrier, wherein the barrier is supported on wires that span between a plurality of stanchions, characterised in that the barrier is sub-divided into discreet sections, wherein each section is capable of being lowered or tensioned independently of the remaining sections of the barrier.

This has the advantage that the discreet portions of the barrier may be erected, lowered or tensioned for whatever purpose in a far more cost-effective manner to that known heretofore.

The barrier may typically comprise of netting and preferably each section of the barrier is supported by at least one wire running between the stanchions.

The stanchions are used to elevate the wires at a suitable height and in a preferred embodiment there are two wires attached to each stanchion.

It is desirable if the stanchions are designed to be able to stand erect in use, without the need for them being partially embedded in the ground. For example, the stanchions may have a base or legs that offer a stable foundation to the stanchions sufficient to allow them to be free standing. The base may be weighted with concrete or may be formed of a heavy metal section. The stanchions themselves or their bases may also or alternatively be tethered to the ground by tendons, which may simply be a continuation of the wire attached to the stanchions. Preferably, the stanchions poles are pivotal relative to their bases so as to provide a means for manipulating the tension of the wires supported by the stanchions, through the varying of the extent of lean of the poles.

The stanchions may also be tethered to ground anchors to provide stability and to react the tension loads in the wires used to tension the barrier sections. These ground anchors are preferably of a screw-in type as will be known to those skilled in the art. Such anchors can be varied in diameter and depth of penetration to suit the ground conditions. The base may also be used for anchoring and tensioning the main tensioning wires.

The stanchions preferably surround the area to be enclosed with the wires running between stanchions on opposite sides of the area. For example, where the area to be enclosed is a rectangle, the pairs of stanchions between which the wires extend will be located on two opposing sides of the rectangle. The remaining two opposing sides need not have wires extending between them, but this remains an option.

Each stanchion preferably has a pair of wires running between it and a corresponding stanchion located on an opposing side of the area. The sections of net are preferably arranged in long strips which extend across the area parallel to the wires. The longitudinal edges of each section of net are preferably supported by respective wires running from two adjacent stanchions on one side of the area to two corresponding adjacent stanchions at the opposing side of the area. Thus each net section is supported on two wires attached at or toward their respective ends to adjacent stanchions. Each wire can optionally be tightened or loosened on the stanchion individually of its neighbours, allowing tension to be applied or removed to each individual net section independently of the others.

The net sections are preferably provided with skirts at their peripheral longitudinal edges (and optionally at their ends) for attachment to neighbouring sections of net in order to provide a continuous barrier to litter and birds.

The independent installation and removal of individual sections of net will allow a section of net to be lowered for repair and/or replacement in the event of being torn or otherwise damaged. This will also allow the enclosure to be partially dismantled for relocation. Conversely, the enclosure can be extended by adding stanchions and more sections of netting. Existing arrangements of net enclosures comprising a single large net do not permit easy extension or partial dismantling of the enclosure.

The use of discreet net sections also simplifies the supply of netting by avoiding the need to produce and handle a single net of larger dimensions.

Embodiments of the present invention will now be described by way of example and with reference to the accompanying drawings in which:-
Fig. 1 illustrates a section of netting for use in a first embodiment of the present invention;
Fig. 2 shows a base for a stanchion with a stanchion being assembled;
Fig. 3 shows an assembled stanchion for use in an embodiment of the present invention;
Fig. 4 shows a side view of a stanchion and a pair of wires;
Fig. 5a shows a plan view of a net section being tensioned by two wires;
Fig. 5b shows a side view of a pair of stanchions with the guide wires between them slack;
Fig. 5c shows the same pair of stanchions with the guide wires between them in tension;
Fig. 6 shows an alternative base that may be used with a stanchion;
Fig. 7a shows an extension that may added to the enclosure;
Fig. 7b shows an exit that may be incorporated into the netting for use by personnel; and
Fig. 8 shows an extended netting enclosure in accordance with the present invention.

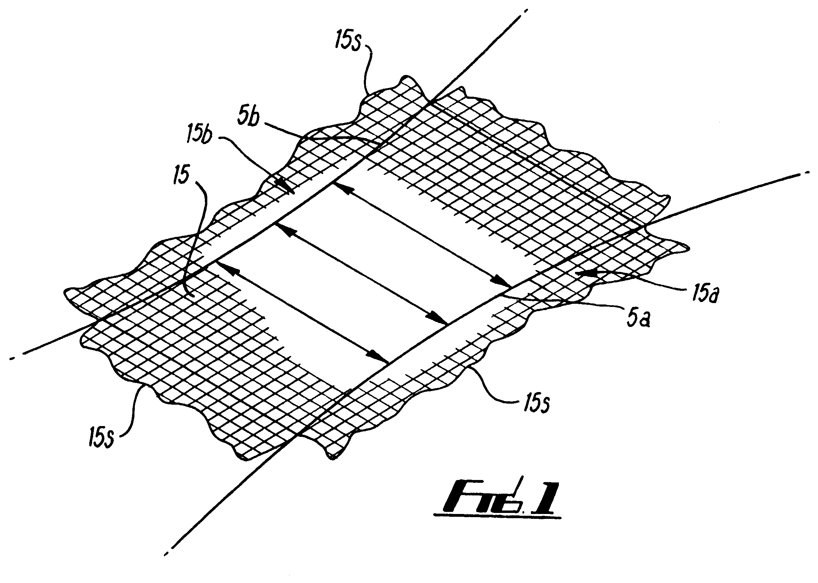

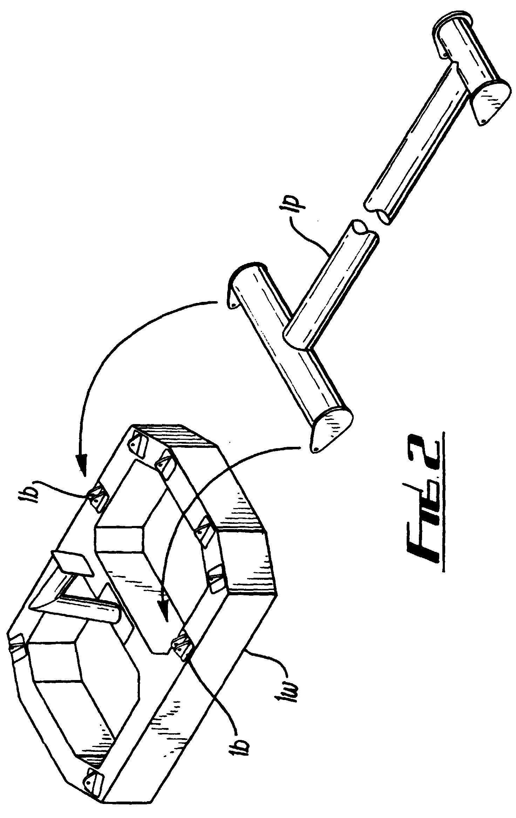

Referring now to the drawings, one embodiment of a netting enclosure according to the present invention comprises two lines of stanchions 1, the lines being substantially parallel and located 100 metres apart. Within each line, individual stanchions are spaced at 10 metre centres, with wires (not shown) extending between them for supporting discreet sections of netting that collectively form a barrier. The wires are afforded with an appropriate tension to minimise the sag along their length, and to tension the respective net sections. The length of the enclosure can be varied, but may generally be of the order of 120 metres long. Each stanchion comprises a pole 1p hingedly attached to a base plate 1b weighted by a concrete pad 1w. The pole 1p can be of any suitable size according to the desired height of the enclosure, but in this embodiment is 9-12.5 metres long. The pad 1w can be altered in size to provide more or less weight to steady the stanchion 1 against toppling, but in this embodiment might typically be 1-1.5 cubic metres.

The pole 1p is supported in the base plate 1b by stays 1s and, optionally, by further stays attached to ground anchors. The stays can be tensioned in order to keep the pole 1p in a fixed orientation. The stanchions 1 need not be embedded in the ground, since the weighted concrete pad 1w can ensure sufficient stability, but it should be appreciated that embedding the pad 1w in the ground remains an option.

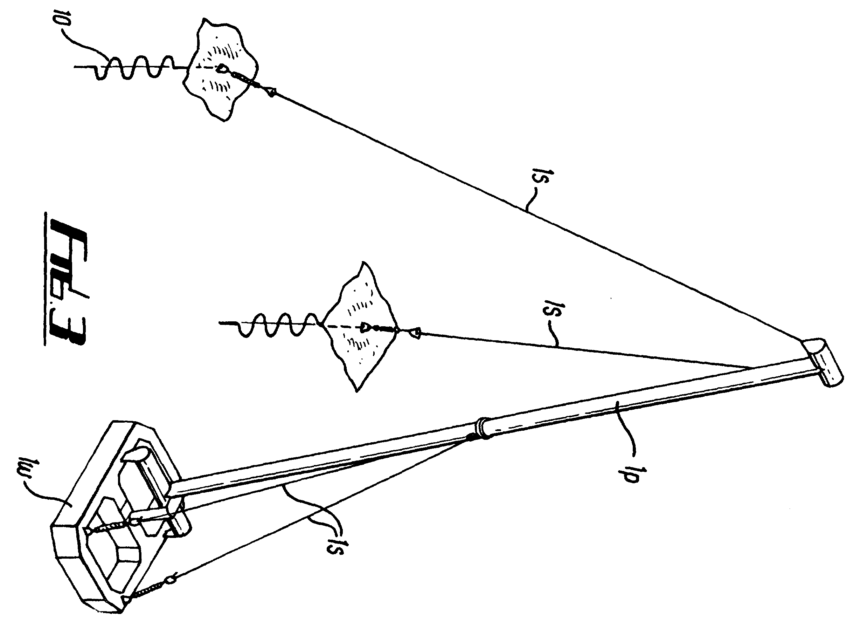

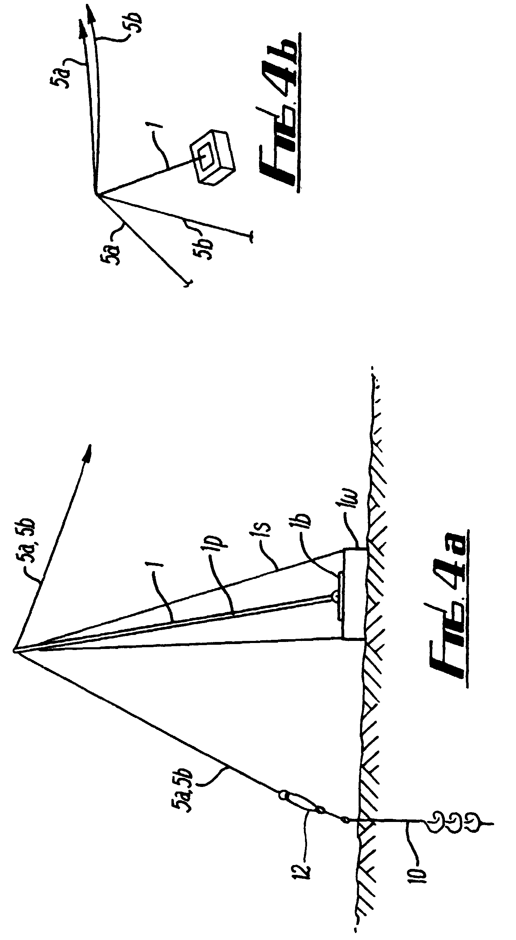

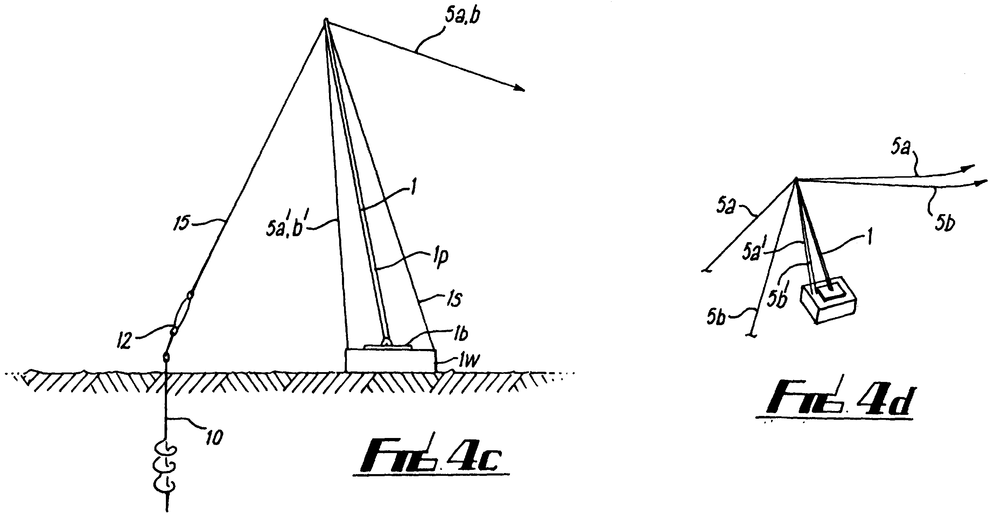

With reference to Fig. 4, the stanchions 1 in each line are disposed with the poles 1p extending slightly off vertical and away from the opposing line of stanchions as shown In Fig. 4a. Each stanchion 1 in the line is connected to a corresponding stanchion in the opposite line by two wires 5a, 5b. The wires 5a, 5b also extend from the respective stanchions 1, to a ground anchor 10 via a tirfor 12 or some other tensioning device.

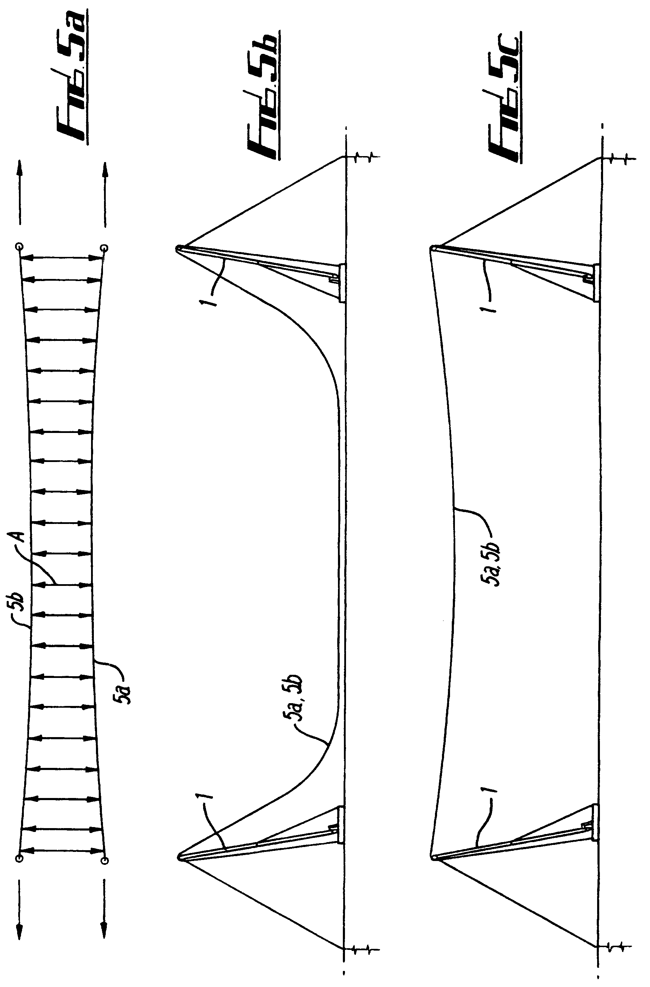

Alternatively, the wires 5a, 5b can be anchored to the base 1w, as shown in dotted lines 5a', 5b' in Figs. 4c, 4d and Fig. 5, and can be tensioned by any suitable means. The wires 5a, 5b extend between opposing stanchions 1 across the area to be enclosed as shown in Fig. 5. The stanchions 1 can be made from standard steel section, and can have fittings at the top end for attachment and guiding of wires 5a, 5b. The stanchions can be adapted to be dismantled into two or more shorter lengths.

Discreet sections of netting 15 are supported by a pair of wires extending across the area to be covered. One side of the net section 15b is supported by one wire 5b extending between a pair of stanchions on opposite sides of the area to be enclosed, and the other side of the netting 15a is supported by a second wire 5a extending across the area between a stanchion located adjacent to the first stanchion to which the wire 5b is attached. Thus, each net section 15 is supported by four stanchions 1 between which run two wires 5a and 5b.

The peripheral edges of the net section 15 incorporate skirts 15s which can be attached to adjacent net sections 15, and optionally draped to the ground.

Once the net sections 15 have been located on the wires 5a, 5b, across the width of the area to be enclosed, and the skirts 15s are attached to adjacent net sections 15 where appropriate, the net sections can be raised into place by applying tension to the wires 5a, or by tirfors 12 so as to raise the net sections 15 from the position on the ground as shown in 5b to the required operating height as shown in Fig. 5c.

Applying tension to the wires 5a, 5b tensions the net longitudinally between the stanchions 1, and also tensions it transversely in the direction of the arrows A shown in Fig. 5a.

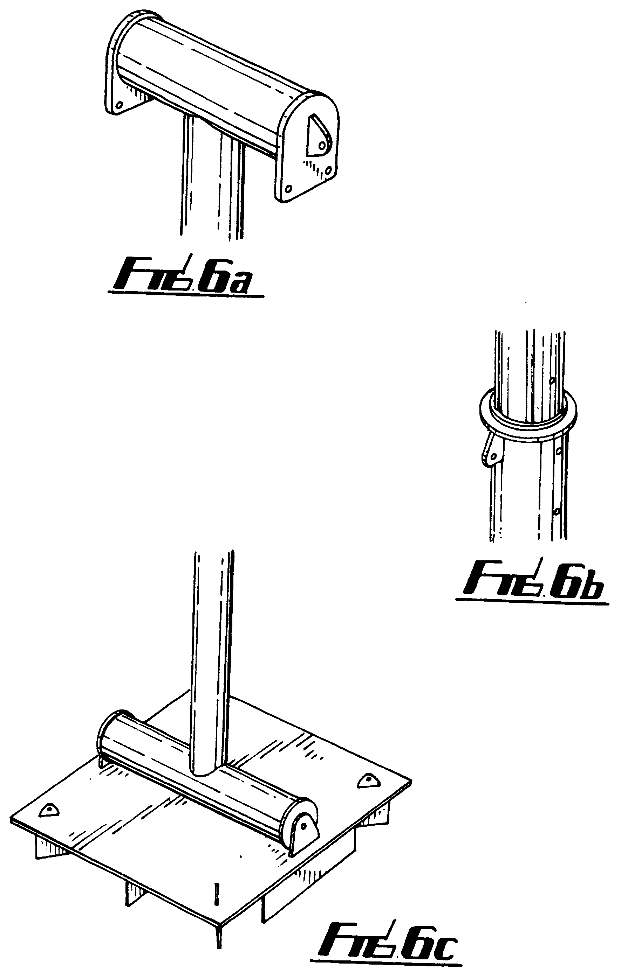

In Figs. 6a, 6b and 6c, various details are illustrated by way of example only. Fig. 6a shows a close up view of the top of a stanchion, including the eyes for permitting the guiding and locating of wires. Fig. 6b illustrates a telescopic joint in the pole section of a stanchion, permitting versatility in the height of the enclosure. In Fig. 6 there is shown a plate connector for providing a means of mechanical connection between the stanchion pole and a concrete base. Notably, the stanchion pole may pivot in relation to the base, thereby providing a means for generating further tension in the wires 5.

The net sections can be made from polypropylene with 50mm square mesh, being lightweight, rotproof and UV stabilised for extended life. Similar netting can be attached around the outside of the stanchions to enclose fully the area being filled and prevent entry by birds.

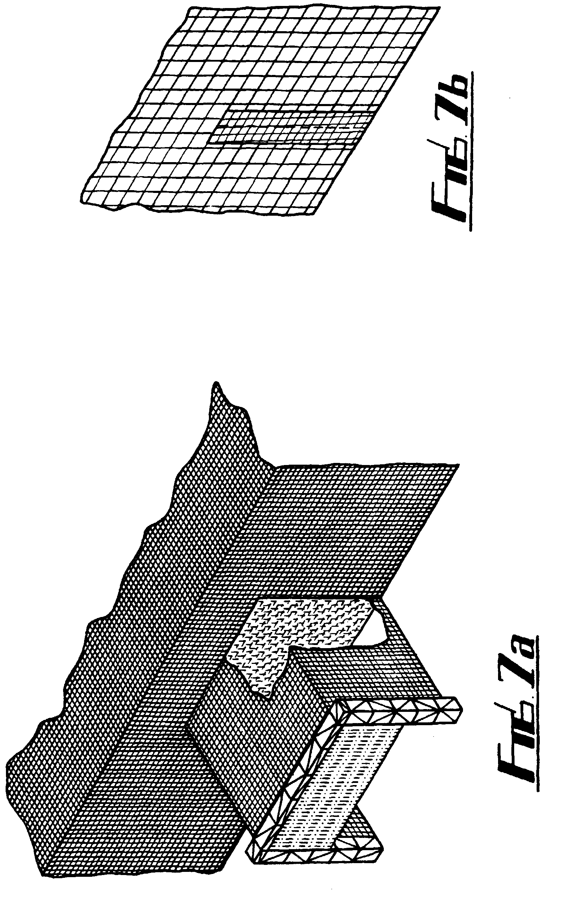

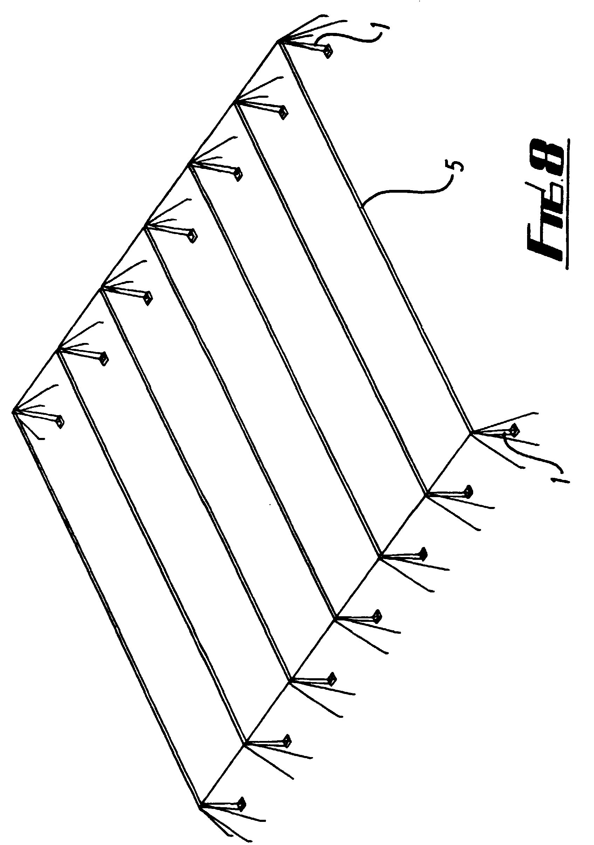

Extensions and/or doors, as illustrated in Figs. 7a and 7b, can be provided in the side walls to allow vehicular and/or personnel access. The total area of netting can be assembled on site using a number of discreet net sections of standard width, as illustrated in Fig. 8. These can be clipped or tied together to complete the enclosure and close any gaps. This enables individual sections of netting to be replaced or repaired if necessary without removal or disassembly of the netting enclosure, and can allow continuity of dumping operations at the same time as carrying out necessary repairs. This also simplifies the supply of netting by avoiding the need to produce and handle a single net of larger dimensions. Sag can also be removed in different sections of the net. Safety devices can be incorporated in the wires 5 to ensure tension does not exceed safety standards.

The installation procedure for erection of the enclosure will be generally as follows. Removal and dismantling will be a reverse of these steps.
1. Set out locations for stanchions and level ground.
2. Position stanchion bases and align.
3. Install the screw-in ground anchors.
4. Pre-rig stanchions with side stays and main wires.
5. Offer up the stanchions to the hinged attachment points on the base plate and insert the hinge pin.
6. Raise stanchions into temporary support and secure to the base using the side stays.
7. Lay out the main wires and attach the net.
8. Anchor one end of the main wires to the base or ground anchors, and rig the wires through a snatch block fitted to the top of the associated stanchion.
9. Use temporary rigging to the other end of the main tensioning wires and the opposing stanchion, tension the wires to take up some of the slack and raise the netting off the ground.
10. Rig the other end of the main wires through a snatch block on the opposing stanchions, attach a tensioning device fitted to the base or to ground anchors, and take up the slack on the main wires.
11. Extend the net along the wires from one side of the enclosure to the other.
12. Apply the final tension in the main wires using a tirfor, or other tensioning device attached to the ground anchor or to the base.
13. Unwrap the side skirts and overlap onto an adjacent section of netting. Secure with tie-wraps (can be done before step 12).
14. Unwrap the end skirts, drape down to ground level and secure.
15. Repeat for all other stanchions.

Further modifications and improvements may be added without departing from the scope of the invention herein intended.

## Claims

1. An enclosure comprising a barrier (15), wherein the barrier is supported on wires (5) spanning a plurality of stanchions (1), characterised in that the barrier is sub-divided into discreet sections, wherein each section is capable of being moved independently of the remaining sections of the barrier.

2. An enclosure as claimed in Claim 1 wherein the barrier is formed as netting.

3. An enclosure as claimed in Claim 1 or 2, wherein each section of the barrier is associated with at least one wire running between the stanchions.

4. An enclosure as claimed in any one of the preceding Claims, wherein each stanchion supports two wires.

5. An enclosure as claimed in any of the preceding Claims, wherein the stanchions in use are adapted to be free standing without the need for them being embedded in the ground.

6. An enclosure as claimed in any of the preceding Claims comprising a pole and a base, wherein the base is of sufficient weight to enable the stanchion to be free standing in use.

7. A stanchion as claimed in Claim 6 wherein the base is tethered to the ground by tendons.

8. An enclosure as claimed in any of the preceding Claims wherein the stanchion is tethered to ground anchors to provide stability and to react the tension loads in the main tensioning wires.

9. An enclosure as claimed in Claim 8, wherein the ground anchors are screw-in type which can be varied in diameter and depth of penetration to suit the ground conditions.

10. An enclosure as claimed in any of the preceding Claims 6 to 9, wherein the stanchions are pivotal relative to their base.

11. An enclosure as claimed in any of the preceding Claims wherein the sections of the barrier are arranged in elongate strips that extend across the area parallel to the wires.

12. An enclosure as claimed in any of the preceding Claims wherein the longitudinal edges of each section of barrier are supported by respective wires running from two adjacent stanchions on one side of the area to two corresponding adjacent stanchions at the opposing side of the area.

13. An enclosure as claimed in any of the preceding Claims wherein each wire can be adjusted on the stanchion individually of its neighbours, allowing the tension of each individual barrier section to be adjusted independently of the others.

14. An enclosure as claimed in any of the preceding Claims wherein the barrier sections are provided with skirts at their peripheral longitudinal edges for attachment to neighbouring sections of the barrier in order to provide a continuous barrier to litter and birds.

15. An enclosure as claimed in any of the preceding Claims wherein the barrier sections are provided with skirts at their ends in order to provide a continuous barrier to litter and birds along the edges of the area marked by the location of the stanchions.

16. An enclosure as claimed in any of the preceding Claims wherein discreet sections of the barrier may be lowered for repair, relocation or replacement independently of other discreet sections of the barrier.

17. An enclosure as claimed in any of the preceding Claims for use around a land-fill site.
